# FASCICULE DE BREVET EUROPEEN

(11) **EP 0 600 771 B1**
(45) Date de publication et mention de la délivrance du brevet: **15.05.1996**
(21) Numéro de dépôt: 93402863.0
(22) Date de dépôt: 26.11.1993
(51) Int. Cl.: B60C 17/06, B60C 17/04

(54) **Dispositif d'anneau perfectionné pour roulage à plat**
Verbesserte ringförmige Notlaufeinrichtung
Annular device improved for flat running

(30) Priorité: 03.12.1992 FR 9214561
(43) Date de publication de la demande: 08.06.1994
(73) Titulaire: HUTCHINSON, F-75008 Paris (FR)
(72) Inventeur: Boni, Bernard, F-95660 Champagne-sur-Oise (FR); Carpentier, Eric, F-95660 Champagne-sur-Oise (FR); Babillon, Laurent, F-75017 Paris (FR)
(74) Mandataire: Doireau, Marc

(56) Documents cités:
- EP-A- 0 123 695
- EP-A- 0 430 743
- DE-C- 135 791
- FR-A- 430 994
- FR-A- 1 560 299
- FR-A- 2 610 249
- US-A- 3 528 472

## Description

La présente invention concerne un dispositif d'anneau perfectionné pour roulage à plat pour roue de véhicule muni d'un pneumatique sans chambre à air monté sur une jante monobloc à puits ou creux de jante, logé à l'intérieur dudit pneumatique et épousant au moins en partie la forme de la jante, la surface externe dudit anneau étant distante de la surface interne de la bande de roulement du pneumatique aussi longtemps que celui-ci est dans sa condition normale de fonctionnement, ledit dispositif étant du type comprenant, dans sa partie destinée à venir au contact du creux de jante, une lèvre de butée pour le maintien d'un talon du pneumatique dont l'autre talon est soumis à l'action d'une cale prévue sur la face diamétrale de l'anneau opposée à celle portant la lèvre de butée.

D'une manière générale, les dispositifs de roulage à plat sont des dispositifs qui, placés à l'intérieur d'un pneumatique sans chambre à air monté sur une jante, permettent aux véhicules dont ils équipent les roues de continuer à rouler de manière satisfaisante en cas de diminution partielle ou totale de la pression de gonflage du pneumatique. De tels dispositifs trouvent application pour des roues de véhicules amenées à évoluer dans des zones de circulation difficile ou dangereuse et pour lesquelles une certaine mobilité doit être conservée en toutes circonstances, que la diminution de gonflage soit due à une crevaison accidentelle ou provoquée.

Les conditions que doivent remplir de tels dispositifs sont à la fois sévères et contradictoires. Il importe, en effet, lors d'une crevaison ou même d'une chute partielle de la pression de gonflage d'un pneumatique :
- d'empêcher les talons du pneumatique de se séparer de leur siège sur la jante, que celle-ci soit du type plate, démontable ou non démontable ou encore à puits ou creux de jante,
- de limiter l'affaissement du pneumatique,
- d'éviter que la bande de roulement du pneumatique qui vient au contact du dispositif ne soit pas trop rapidement endommagée par poinçonnement, et
- de conserver aux roues des caractéristiques d'amortissement aussi bonnes que possible.

Un dispositif d'anneau du type précité, correspondant au préambule de la revendication 1, est décrit dans le document FR-A-2 654 989 où l'anneau est constitué par l'assemblage de plusieurs secteurs arqués munis à chacune de leurs extrémités de moyens d'accouplement. L'anneau est en matériau composite à base d'une résine thermoplastique armée, la lèvre de butée pour le maintien d'un talon du pneumatique est venue d'une pièce avec chacun des secteurs de l'anneau, et la cale pour le maintien de l'autre talon du pneumatique est en élastomère et fixée sur les secteurs.

D'une manière générale, un tel dispositif d'anneau pour roulage à plat présente notamment deux types d'inconvénients. Le premier type d'inconvénients réside dans l'utilisation d'un matériau très rigide susceptible de provoquer une crevaison du pneumatique lors d'un contact, par suite d'un choc frontal par exemple sur un trottoir, entre l'enveloppe de roulement et l'anneau. La rigidité du matériau, compte tenu du montage du dispositif à l'intérieur du pneumatique, implique d'ailleurs un anneau en plusieurs secteurs. Le second type d'inconvénients réside dans les opérations de montage et/ou de démontage qui sont longues, nécessitent le recours à des opérateurs qualifiés et impliquent des outils spécifiques. Un tel dispositif est également d'un prix de revient élevé.

C'est, par conséquent, un but général de l'invention de fournir un dispositif d'anneau perfectionné pour roulage à plat, qui soit simple, facile à monter et à démonter sans outillage spécialisé, et qui soit suffisamment souple pour ne pas occasionner la crevaison du pneumatique lors d'un choc.

C'est, aussi, un but de l'invention de fournir un tel dispositif qui permette de limiter l'affaissement du pneumatique en cas de crevaison, de sorte que peut être évitée une détérioration rapide des flancs du pneumatique, et qui autorise le déplacement du véhicule sur plusieurs dizaines de kilomètres, tout en gardant le pneumatique sur la roue.

C'est, aussi, un but de l'invention de fournir un tel dispositif qui soit propre à supporter la charge du véhicule dans les meilleures conditions lors du roulage à plat, sans cisailler la bande de roulement du pneumatique en lui appliquant une pression trop importante et sans qu'il apparaisse un endommagement prémâturé par échauffement interne.

C'est, encore, un but de l'invention de fournir un tel dispositif qui soit suffisamment souple pour ne pas engendrer des vibrations mécaniques importantes, lors du roulage à plat, garantissant ainsi une conduite du véhicule dans de bonnes conditions de sécurité, non-obstant la crevaison du pneumatique équipé du dispositif.

C'est, enfin, un but de l'invention de fournir un tel dispositif propre à équiper des roues de véhicules civils ou militaires susceptibles de faire l'objet d'attaques par balles, c'est-à-dire un dispositif qui soit aussi peu sensible que possible à l'impact desdites balles.

Selon l'invention, tous ces buts sont atteints par un dispositif d'anneau du type précité, pour roulage à plat pour roue de véhicule et qui est caractérisé en ce que l'anneau est formé d'une seule pièce fendue en un point de sa circonférence pour présenter des portions d'extrémité déplaçables l'une par rapport à l'autre, ledit anneau comprenant un noyau en matériau composite, à base d'une résine thermoplastique armée, sur lequel adhère une dent annulaire en caoutchouc dont la surface externe forme la surface externe de l'anneau, les portions d'extrémité de l'anneau étant assemblées l'une à l'autre à l'aide de fixations mécaniques destinées à assurer le serrage de l'anneau sur la jante de la roue.

Selon une autre caractéristique de l'invention, la lèvre de butée pour le maintien d'un talon du pneumatique est venue d'une pièce avec le noyau de l'anneau et est réalisée dans le même matériau que ce dernier.

Selon une autre caractéristique de l'invention, la cale destinée à exercer un effort de compression sur l'autre talon du pneumatique est en caoutchouc et peut être venue d'une pièce avec la dent de l'anneau, la dent et la cale étant par exemple fabriquées à partir d'un poly-isoprène très résilient d'une dureté SHORE A de l'ordre de 70.

En variante, la cale peut être fabriquée en un caoutchouc plus souple et être intégrée à la dent lors du processus de moulage.

Selon un mode de réalisation de l'invention, les fixations mécaniques destinées à assembler les portions d'extrémité de l'anneau, comprennent un câble situé sensiblement dans le plan diamétral de l'anneau et noyé dans ce dernier, deux manchons filetés extérieurement et respectivement sertis aux deux extrémités libres du câble et qui font saillie au niveau de la fente de l'anneau, et un écrou vissé sur les deux manchons, l'anneau comportant une fenêtre d'accès débouchant dans ladite fente pour le passage d'un outil de commande en rotation de l'écrou.

Le câble, par exemple en acier, en plus de sa fonction d'assurer la mise en place et le maintien de l'anneau sur la jante, permet notamment de reprendre les efforts de traction dus à la centrifugation de l'anneau à l'intérieur du pneumatique.

L'écrou des moyens de fixation présente une certaine longueur de manière à permettre l'ajustement du serrage de l'anneau sur la jante, et de compenser la différence de diamètre que l'on peut rencontrer sur un type de roue donné.

Selon un second mode de réalisation de l'invention, les fixations mécaniques destinées à assembler les portions d'extrémité de l'élément annulaire, comprennent uniquement un boulon d'un type particulier avec un écrou de manoeuvre solidaire de la tige du boulon.

D'autres avantages, caractéristiques et détails de l'invention ressortiront de la description explicative qui va suivre faite en référence aux dessins annexés, donnés uniquement à titre d'exemple et dans lesquels :
- la figure 1 est une vue en coupe radiale d'une partie d'une roue équipée d'un dispositif selon l'invention,
- la figure 2 est une vue de côté suivant la flèche F2 de la figure 1,
- la figure 3 est une vue en coupe suivant la ligne III-III de la figure 2,
- la figure 4 est une vue de côté semblable à celle de la figure 2, mais selon une première variante de réalisation,
- la figure 5 est une vue en coupe suivant la ligne V-V de la figure 4,
- la figure 6 est une vue de côté semblable à celle de la figure 2, mais selon une seconde variante de réalisation, avant serrage du dispositif d'anneau sur la jante de roue, et
- la figure 7 est une vue en coupe suivant la ligne VII-VII de la figure 6, après serrage du dispositif d'anneau sur la jante de roue.

Un dispositif d'anneau 1 pour roulage à plat, selon l'invention et tel qu'illustré sur les différentes figures, est prévu pour être logé à l'intérieur d'un pneumatique 2, sans chambre à air, monté sur une jante de roue 3.

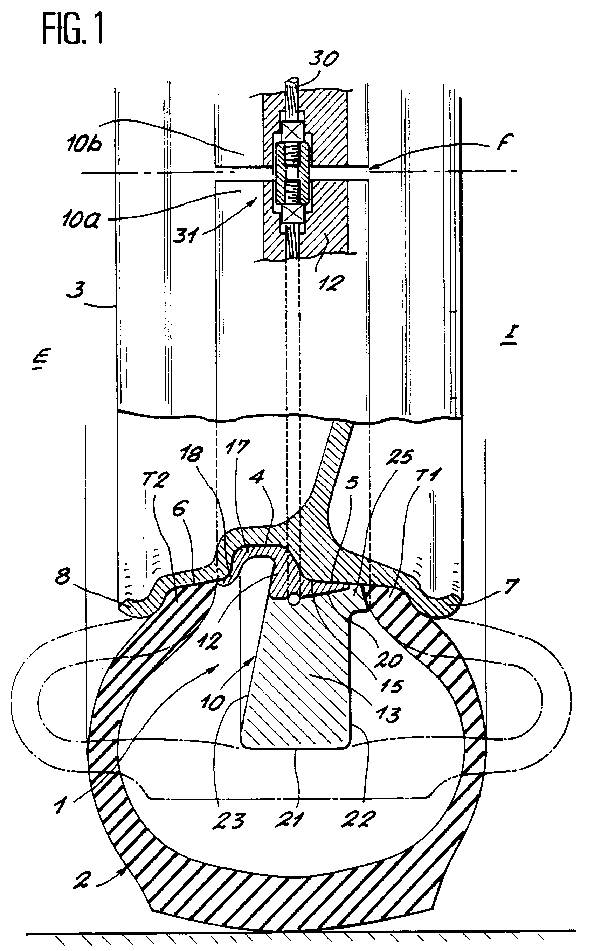

Selon le mode de réalisation représenté aux figures 1 à 3, la jante 3 est du type monobloc et comporte un puits où creux de jante 4 adjacent, vers l'intérieur I de la roue, à une première partie globalement tronconique 5 en regard de laquelle est prévue, vers l'extérieur E de la roue, une seconde partie tronconique 6. Les parties tronconiques 5 et 6 sont bordées, vers l'extérieur de la jante 3, par des épaulements 7 et 8, respectivement, qui servent d'appui aux talons T1 et T2 du pneumatique 2.

Le dispositif d'anneau 1 est constitué par un anneau 10 d'une seule pièce fendue en un point de sa circonférence pour présenter deux portions d'extrémité 10a et 10b déplaçables l'une par rapport à l'autre.

L'anneau 10 est un ensemble monobloc constitué d'un noyau annulaire 12, fendu et prolongé radialement vers l'extérieur par une dent annulaire fendue 13, les fentes du noyau 12 et de la dent 13 étant mises en correspondance l'une avec l'autre pour former une fente unique f.

D'une manière générale, la surface périphérique interne 15 du noyau 12 est destinée à venir au contact de la surface périphérique externe de la jante 3, au voisinage de la partie centrale de celle-ci, et présente par conséquent une forme conjuguée de celle de la jante 3.

Dans l'exemple illustré aux figures 1 à 3, la surface périphérique interne 15 du noyau 12 vient au contact de la jante 3 en s'engageant pour partie dans le puits 4 et en recouvrant en partie la surface tronconique 5 adjacente de la jante 3 située du côté intérieur en direction du talon T1.

Le noyau 12 se prolonge latéralement, côté extérieur E de la roue, par une lèvre de butée annulaire 17, fendue et destinée à venir au contact du fond du puits 4 et en recouvrant en partie la surface tronconique 6 adjacente de la jante 3. L'extrémité libre de cette lèvre forme une butée 18 destinée à maintenir le talon extérieur T2 du pneumatique 2 et l'empêcher de se déplacer latéralement sur la jante 3 lors du roulage à plat, afin d'améliorer la motricité dans cette configuration et d'assurer une bonne tenue de route, tout en permettant le démontage de l'enveloppe de pneumatique sans détériorier la butée 18.

La dent annulaire 13 a une section droite approximativement en trapèze rectangle qui est délimitée, dans le plan de la figure 1, par deux bords respectivement interne 20 et externe 21 parallèles à l'axe de roue, par un bord sensiblement vertical 22 situé du côté intérieur I de la roue et par un bord oblique 23 tel que la largeur de la dent 13 augmente en direction de sa surface périphérique externe.

La dent annulaire 13 se prolonge latéralement, côté intérieur I de la roue, par un bossage annulaire formant une cale 25 dont la surface d'extrémité libre est à légère conicité par rapport à l'axe de la roue. Cette cale 25 présente des dimensions, en particulier une largeur mesurée parallèlement à l'axe de la roue, qui sont telles qu'elle peut venir en appui contre la surface interne du talon T1 du pneumatique 2, afin d'exercer un effort de compression sur ce talon et l'empêcher de se déplacer latéralement sur la jante 3 lors du roulage à plat.

Conformément à l'invention, le noyau 12 est réalisé en un matériau composite à base d'une résine thermoplastique choisie dans la famille des polyamides séquencés pour RIM, par exemple, et elle est armée de renforts en fibres de verre, procurant ainsi un matériau ayant de bonnes caractéristiques mécaniques de résistance en traction et en compression, une très bonne tenue en fatigue, à l'échauffement, aux chocs et de résistance à l'impact des balles.

La présence des fibres de verre en tant que renforts du matériau composite du noyau 12 permet d'obtenir pour ce dernier un coefficient de dilatation notablement réduit par rapport à celui d'une résine thermoplastique seule. La lèvre de butée 17 est venue d'une pièce avec le noyau 12 de l'élément annulaire 10, et elle est réalisée dans le même matériau, la présence des fibres de verre en tant que renforts de ce matériau permettant de réduire les sections droites de cette lèvre 17 et des parties qui lui sont adjacentes, avec pour conséquence une plus grande facilité de montage du dispositif et du pneumatique sur la jante.

Conformément à l'invention, la dent annulaire 13 est par exemple fabriquée à partir d'un élastomère tel que le poly-isoprène très résilient et d'une dureté SHORE A de l'ordre de 70, et elle est adhérée sur le noyau 12.

La cale 25 pour le maintien de l'autre talon T1 du pneumatique 2 est par exemple venue d'une pièce avec la dent annulaire 13 et est constituée du même matériau. La souplesse du caoutchouc est mise à profit pour que l'effort induit par la compression de la cale 25 soit autant que faire se peut indépendant de la largeur de la roue qui, de construction même, a des tolérances de largeur intérieure de l'ordre de plus ou moins 3 mm pour des diamètres de 35,56 cm, 38,10 cm et 40,64 cm (14, 15 et 16 pouces) et de plus ou moins 5 mm pour des diamètres de 50,80 cm (20 pouces).

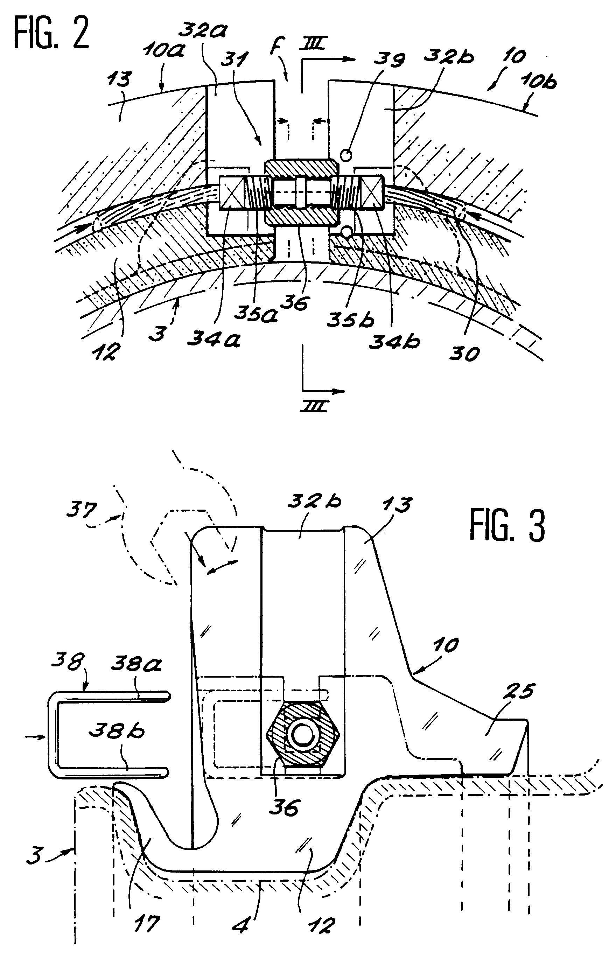

Dans le mode de réalisation représenté sur les figures 1 à 3, les portions d'extrémité 10a et 10b de l'anneau 10 sont assemblées l'une à l'autre à l'aide d'un câble 30 et de moyens 31 assurant le raccordement entre les deux extrémités libres du câble 30 et le serrage de l'anneau 10 sur la jante 3. En se reportant plus particulièrement à la figure 2, le câble 30 est situé sensiblement dans le plan diamétral de l'anneau 10 et il est noyé dans l'anneau 10 au cours de l'opération de moulage de ce dernier. Les deux extrémités libres du câble 30 font respectivement saillie au-delà des deux faces d'extrémité libres de l'anneau 10 dans une lumière ou ouverture d'accès 32a, 32b située de part et d'autre de la fente f pour permettre le montage et la manipulation des moyens de raccordement et de serrage 31. Autrement dit, la lumière d'accès est scindée en deux parties 32a et 32b prévues respectivement au niveau des deux faces d'extrémité libres des portions 10a et 10b de l'anneau 10, cette lumière 32a, 32b débouchant à la surface périphérique externe de l'anneau 10.

Les moyens 31 pour assurer le raccordement des deux extrémités libres du câble 30 et le serrage de l'anneau 10 sur la jante 3, sont constitués :
- par deux manchons 34a et 34b respectivement fixés par sertissage par exemple, aux deux extrémités du câble 30, ces deux manchons venant se loger respectivement dans les deux parties 32a et 32b de la lumière s'étendant de part et d'autre de la fente f, et ils sont filetés extérieurement suivant deux filetages 35a et 35b à pas inversés, et
- par un écrou 36 ayant deux filetages 36a et 36b respectivement complémentaires des filetages 35a et 35b, qui se visse sur les deux manchons 34a et 34b.

Ainsi, suivant le sens de rotation imprimé à l'écrou 36 à l'aide d'une clé 37 introduite dans la fente f, les deux manchons 34a et 34b se rapprochent (serrage) ou s'écartent (desserrage) l'un de l'autre.

Le câble 30 est par exemple en acier, d'un diamètre de 6 mm, d'une résistance élastique de 2000 DaN environ et d'une qualité extra-souple pour simplifier le serrage de l'écrou 36.

L'écrou 36 présente une longueur suffisante pour ajuster le serrage de l'anneau 10 sur la jante 3 et compenser les différences de diamètre que l'on peut rencontrer sur un type de roue donné et les tolérances de fabrication de l'anneau 10. Avantageusement, l'écrou 36 n'est pas fileté sur une longueur de quelques millimètres vers chacune de ses extrémités, pour assurer un pré-guidage des manchons 34a et 34b et faciliter ainsi l'opération de serrage.

Une fois l'anneau 10 mis en place sur la jante 3 et pour éviter toute rotation accidentelle de l'écrou 36 susceptible d'entraîner le desserrage de l'anneau 10 et l'apparition d'un balourd défavorable, il est prévu des moyens pour bloquer l'écrou 36 en rotation. Ces moyens sont par exemple constitués par une épingle 38, en forme de U, dont les deux ailes parallèles 38a et 38b s'engagent respectivement dans deux canaux latéraux 39 prévus dans l'anneau 10, de manière à venir prendre appui sur deux faces opposées de l'écrou 36 après serrage de celui-ci.

La mise en place du dispositif d'anneau selon l'invention résulte immédiatement de la description qui précède. Après avoir mis en place le talon T1 au contact de l'épaulement 7 sur la jante 3, l'anneau 10 est introduit dans l'enveloppe du pneumatique 2. Cet anneau 10 est venu de moulage avec le câble 30 noyé à l'intérieur, et les deux extrémités libres du câble 30 sont équipées des manchons 34a et 34b d'une part, et de l'écrou 36 d'autre part, de manière à ce que les deux portions d'extrémité 10a et 10b de l'anneau 10 soient reliées entre elles d'une façon lâche en donnant à l'anneau un diamètre supérieur à celui de la jante 3 pour qu'il puisse être rapporté librement autour de celle-ci. Ensuite, on procède à l'opération de serrage de l'anneau 10 pour que sa surface périphérique interne 15 vienne en contact serré avec la surface périphérique externe de la jante 3. Pour cela, l'écrou 36 est vissé au moyen de la clé 37 de manière à engager plus en avant les extrémités libres des deux manchons 34a et 34b à l'intérieur de l'écrou 36 pour rapprocher l'une de l'autre les deux portions d'extrémité 10a et 10b de l'anneau 10. Lorsque l'anneau 10 est en place, sa cale 25 vient en appui contre la surface interne du talon T1, et l'épingle de blocage 38 est ensuite introduite dans les canaux 39 pour fixer en rotation l'écrou 36. Enfin, le talon T2 du pneumatique est mis en place au contact de l'épaulement 8 de la jante avec la lèvre 17 de l'anneau 10 qui vient par son extrémité 18 formant butée en appui sur la surface interne du talon T2, puis la pression de gonflage est appliquée et la roue montée sur le véhicule qu'elle est destinée à équiper.

Par suite d'une crevaison accidentelle ou provoquée, la surface interne de la bande de roulement du pneumatique 2 vient au contact de la surface périphérique de la dent 13 de l'anneau 10, comme cela est représenté en traits mixtes sur la figure 1.

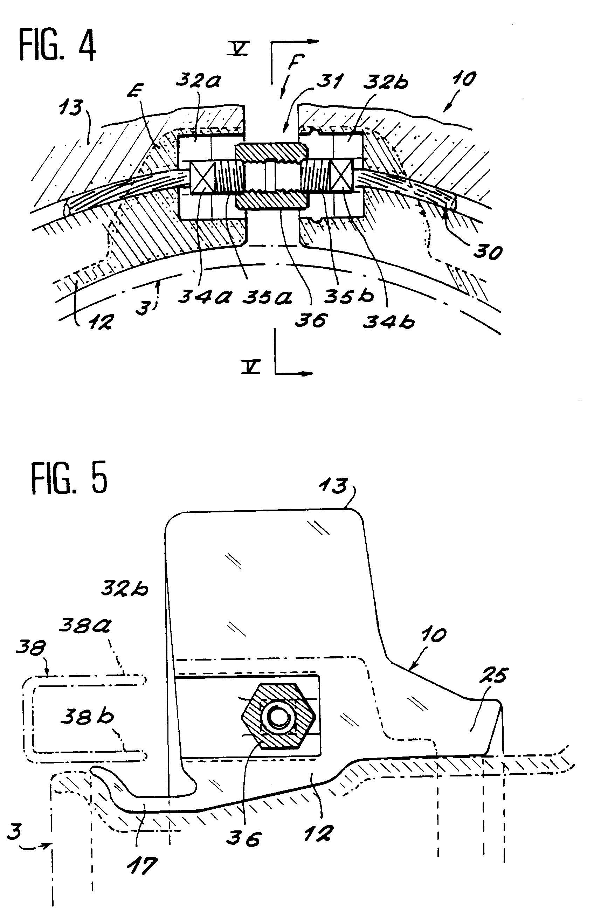

Selon une première variante de réalisation illustrée sur les figures 4 et 5, la lumière 32a et 32b qui permet le montage et la manipulation de l'écrou 36 est une lumière qui débouche au niveau des deux faces latérales opposées de l'anneau 10, les moyens 31 assurant le raccordement des deux extrémités libres du câble 30 et le serrage de l'anneau 10 sur la jante 3 étant identiques à ceux illustrés aux figures 1 à 3.

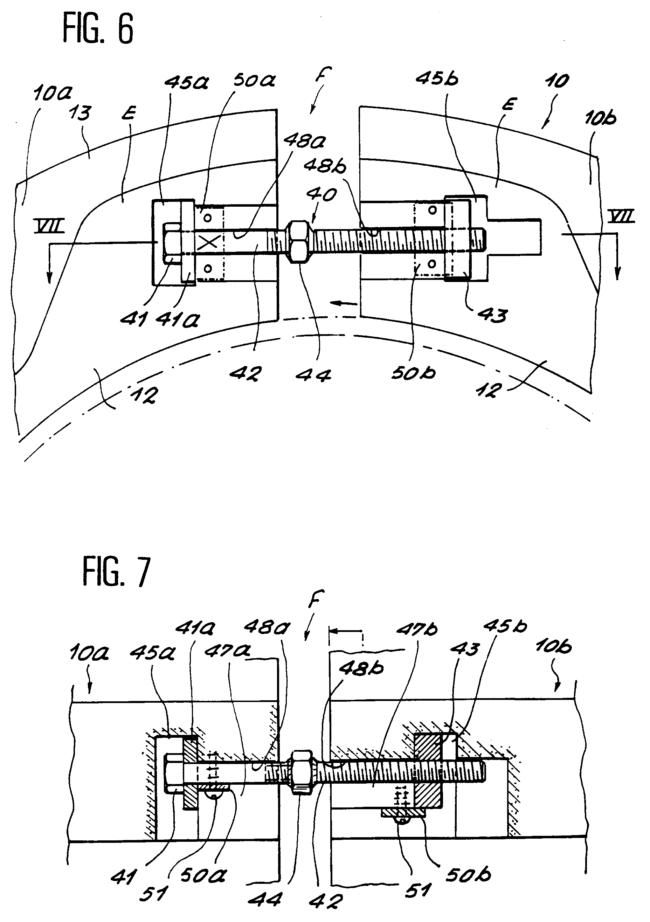

Selon une seconde variante de réalisation illustrée aux figures 6 et 7, les moyens pour assembler l'une à l'autre les deux parties d'extrémité 10a et 10b de l'anneau 10 présentent une structure différente qui ne comporte pas de câble 30.

Ces moyens sont constitués par un boulon 40 d'un type particulier, formé d'une tête 41, d'une tige filetée 42, d'un écrou 43 vissé sur la tige 42 et d'un écrou de manoeuvre 44 soudé sur la tige 42 dans la partie centrale de celle-ci. La tête 41 est destinée à être reçue dans une première lumière 45a qui débouche sur une face latérale de l'anneau 10, cette lumière 45a étant prévue dans la partie d'extrémité 10a de l'anneau 10. En direction de la fente f, cette première lumière 45a se prolonge par une seconde lumière 47a, moins profonde, dont le fond comporte une gorge 48a pour le logement de la tige 42.

D'une manière similaire, on retrouve les mêmes éléments au niveau de la portion d'extrémité 10b de l'anneau 10, les chiffres de référence étant suivis de la lettre b.

La tête de vis 41 avec une rondelle 41a montée sur la tige 42 vient se loger dans la lumière 45a, l'écrou 43 vient se loger dans la lumière 45b et la tige 42 vient se loger dans les gorges 48a et 48b. Le serrage de l'anneau 10 est obtenu en entraînant en rotation l'écrou de manoeuvre 44, de manière à rapprocher l'une de l'autre les deux portions d'extrémité 10a et 10b de l'anneau 10.

Une fois le serrage effectué, le boulon 40 est immobilisé en rotation par l'intermédiaire de deux plaquettes 50a et 50b introduites dans les lumières 47a et 47b. Ces deux plaquettes 50a et 50b viennent respectivement au contact de la tige filetée 42 et de l'écrou 43, et sont fixées à l'anneau 10 au moyen de vis 51.

D'une manière générale, il est à noter que le câble 30 (figures 1 à 5) débouche dans la fente f au niveau d'une zone correspondant au noyau 12, ce qui ne signifie pas pour autant que le diamètre moyen de la boucle formée par le câble 30 est inférieur au diamètre externe du noyau 12, c'est-à-dire que le câble 30 est entièrement logé à l'intérieur du noyau 12.

Dans les exemples illustrés aux figures 1 à 5, le câble 30 est en fait noyé dans la dent 13, mais dans sa partie située au niveau des portions d'extrémité 10a et 10b de l'anneau 10, le câble 30 est noyé dans le noyau 12 qui présente une excroissance E. Il en est de même pour l'exemple illustré aux figures 6 et 7, où les lumières 45a, 47a et 45b, 47b qui reçoivent le boulon 40 sont prévues au niveau d'une excroissance E du noyau 12.

Pour assurer le serrage de l'anneau 10 sur la jante 3, l'écrou 44 est entraîné en rotation de manière à rapprocher l'une de l'autre les deux portions d'extrémité 10a et 10b de l'anneau 10. Dans les exemples précédents, la cale 25 a été considérée comme étant venue d'une pièce avec la dent 13 de l'anneau. En variante, cette cale 25 peut être intégrée à la dent 13 lors du processus de moulage et être réalisée en un caoutchouc plus souple.

## Revendications

1. Dispositif d'anneau (1) pour roulage à plat pour roue de véhicule muni d'un pneumatique (2) sans chambre à air monté sur une jante monobloc (3) à puits ou creux de jante (4), logé à l'intérieur dudit pneumatique et épousant au moins en partie la forme de la jante, la surface externe (21) dudit anneau (10) étant distante de la surface interne de la bande de roulement du pneumatique aussi longtemps que celui-ci est dans sa condition normale de fonctionnement, ledit dispositif étant du type comprenant, dans sa partie destinée à venir au contact du creux de jante, une lèvre de butée (17) pour le maintien d'un talon (T2) du pneumatique dont l'autre talon (T1) est soumis à l'action d'une cale prévue sur la face diamètrale de l'anneau opposée à celle portant la lèvre de butée, caractérisé en ce que l'anneau (10) est formé d'une seule pièce fendue en un point de sa circonférence pour présenter des portions d'extrémité (10a, 10b) déplaçables l'une par rapport à l'autre, ledit anneau (10) comprenant un noyau (12) en matériau composite, à base d'une résine thermoplastique armée, dont la surface périphérique interne est destinée à venir au contact de la jante (3), sur lequel est adhérée une dent annulaire (13) en caoutchouc dont la surface périphérique externe forme la surface externe (21) dudit anneau, les portions d'extrémité (10a, 10b) étant assemblées l'une à l'autre à l'aide de fixations mécaniques destinées à assurer le serrage de l'anneau (10) sur la jante de roue (3).

2. Dispositif selon la revendication 1, caractérisé en ce que la dent (13) est en un caoutchouc fabriqué à partir de poly-isoprène très résilient et d'une dureté SHORE A de l'ordre de 70.

3. Dispositif d'anneau selon la revendication 1 ou 2, caractérisé en ce que ladite lèvre de butée (17) pour le maintien d'un talon du pneumatique (2) est venue d'une pièce avec le noyau (12) de l'anneau (10) et est réalisée dans le même matériau que ce dernier.

4. Dispositif d'anneau selon la revendication 2 ou 3, caractérisé en ce que ladite cale (25) destinée à exercer un effort de compression sur l'autre talon du pneumatique (2) est venue d'une pièce avec la dent annulaire (13) et est réalisée dans le même matériau que celle-ci.

5. Dispositif d'anneau selon l'une quelconque des revendications précédentes, caractérisé en ce que les moyens mécaniques d'assemblage des parties d'extrémité (10a, 10b) de l'anneau (10) sont constitués par un câble (30), par exemple métallique, et par des moyens de raccordement et de serrage (31) des deux extrémités libres du câble (30) qui font saillie au niveau de la fente (f) de l'anneau (10) pour les rapprocher ou les éloigner l'une de l'autre.

6. Dispositif d'anneau selon la revendication 5, caractérisé en ce que les moyens de raccordement et de serrage (31) sont constitués par deux manchons (34a, 34b), filetés extérieurement suivant deux filetages (35a, 35b) à pas inversés et sertis respectivement aux deux extrémités libres du câble (30), et par un écrou (36) à filetages complémentaires (36a, 36b), vissé sur les deux manchons (34a,34b) et destiné à les rapprocher ou à les écarter l'un de l'autre suivant le sens de rotation imprimé à l'écrou (36).

7. Dispositif d'anneau selon la revendication 6, caractérisé en ce que les moyens de raccordement (31) sont globalement situés dans une lumière (32a, 32b) qui s'étend de part et d'autre de la fente (f) de l'anneau (10).

8. Dispositif d'anneau selon la revendication 7, caractérisé en ce que la lumière (32a, 32b) est une lumière centrale qui débouche à la surface périphérique externe de l'anneau (10).

9. Dispositif d'anneau selon la revendication 7, caractérisé en ce que la lumière (32) débouche au niveau des deux faces latérales de l'anneau (10).

10. Dispositif d'anneau selon l'une quelconque des revendications 5 à 9, caractérisé en ce que le câble (30) est noyé dans l'anneau (10).

11. Dispositif d'anneau selon l'une quelconque des revendications 5 à 9, caractérisé en ce que le câble (30) est noyé dans la dent annulaire (13) de l'anneau (10).

12. Dispositif d'anneau selon l'une quelconque des revendications 1 à 4, caractérisé en ce que les moyens mécaniques d'assemblage des portions d'extrémité (10a, 10b) de l'anneau (10) sont constitués par un boulon (40) formé d'une tête (41), d'une tige filetée (42), d'un écrou (43) vissé sur la tige (42) et d'un écrou de manoeuvre (44) solidaire de la tige (42).

13. Dispositif d'anneau selon la revendication 12, caractérisé en ce que la tête (41) et l'écrou (43) sont logés et retenus dans des lumières (45a, 45b) prévues dans les portions d'extrémité (10a, 10b) de l'anneau (10), respectivement.

14. Dispositif d'anneau selon la revendication 13, caractérisé en ce que les lumières (45a, 45b) sont faites dans le noyau (12) de l'anneau (10).

## Claims

1. A ring device (1) allowing the flat running of a vehicle wheel fitted with a tubeless pneumatic tyre (2) mounted on a monobloc rim (3) with a rim well or hollow (4), seated inside the said tyre and at least partially matching the shape of the rim, the outer surface (21) of the said ring (10) being spaced apart from the inside surface of the tread of the tyre for as long as this latter is in its normal working condition, the said device being of the type which, in its part intended to come in contact with the rim shell, comprising an abutment lip (17) for holding a bead (T2) of the tyre, the other bead (T1) of which is subject to the action of a wedge provided on the diametral surface of the ring opposite that carrying the abutment lip, characterized in that the ring (10) is formed in a single piece split at a point on its circumference in order to provide end portions (10a, 10b) adapted for displacement in respect of each other, the said ring (10) comprising a core (12) of composite material, based on a reinforced thermoplastic resin, the inner peripheral surface of which is intended to come in contact with the rim (3) to which adheres an annular rubber tooth (13), the outer peripheral surface of which forms the outer surface (21) of the said ring, the end portions (10a, 10b) being assembled on each other by means of mechanical fixings intended to clamp the ring (10) on the wheel rim (3).

2. A device according to claim 1, characterized in that the tooth (13) is of rubber produced from polyisoprene which is very resilient and has a SHORE hardness of around 70.

3. A ring device according to claim 1 or 2, characterised in that the said abutment lip (17) for holding a bead of the tyre (2) is in one piece with the core (12) of the ring (10) and is produced from the same material as this latter.

4. A ring device according to claim 2 or 3, characterized in that the said wedge (25) which is intended to exert a compression stress on the other bead of the tyre (2) is in one piece with the annular tooth (13) and is produced in the same material as this latter.

5. A ring device according to any one of the preceding claims, characterized in that the mechanical means for assembling the end parts (10a, 10b) of the ring (10) consist of a (for example) metal cable (30) and means (31) for connecting and clamping the two free ends of the cable (30) which project at the slot (f) in the ring (10) to bring them closer to or move them away from each other.

6. A ring device according to claim 5, characterized in that the connecting and clamping means (31) consist of two sleeves (34a, 34b) which are screw threaded on the outside, having two screw threads (35a, 35b) of opposite pitch and which are respectively crimped onto the two free ends of the cable (30) and by a nut (36) of matching screw threads (36a, 36b) which is screwed onto the two sleeves (34a, 34b) and is designed to bring them closer to or move them away from each other, according to the direction of rotation imposed on the nut (34).

7. A ring device according to claim 6, characterised in that the connecting means (31) as a whole are situated in a hole (32a, 32b) which extends on either side of the slot (5) in the ring (10).

8. A ring device according to claim 7, characterised in that the hole (32a, 32b) is a central hole which opens out on the outer peripheral surface of the ring (10).

9. A ring device according to claim 7, characterized in that the hole (32) opens out at the level of the two lateral faces of the ring (10).

10. A ring device according to any one of claims 5 to 9, characterised in that the cable (30) is embedded in the ring (10).

11. A ring device according to any one of claims 5 to 9, characterised in that the cable (30) is embedded in the annular tooth (13) of the ring (10).

12. A ring device according to any one of claims 1 to 4, characterised in that the mechanical means of assembling the end portions (10a, 10b) of the ring (10) consist of a bolt (40) formed by a head (41), a screw threaded rod (42), a nut (43) screwed onto the rod (42) and an operating nut (44) rigid with the rod (42).

13. A ring device according to claim 12, characterised in that the head (41) and the nut (43) are housed and retained in holes (45a, 45b) provided in the end portions (10a, 10b) of the ring (10) respectively.

14. A ring device according to claim 13, characterised in that the holes (45a, 45b) are made in the core (12) of the ring (10).

## Patentansprüche

1. Ringvorrichtung (1) zum Plattfußfahren für ein mit einem Reifen (2) ohne Luftkammer, der auf einer massiven Felge (3) mit Führung oder Vertiefung (4) der Felge montiert ist, ausgerüstetes Fahrzeugrad, die im Inneren des Reifens untergebracht und wenigstens teilweise der Form der Felge angepaßt ist, wobei die äußere Oberfläche (21) des Rings (10) von der inneren Oberfläche des Laufbands des Reifens solange entfernt ist, wie derselbe in seinem normalen Funktionszustand ist, wobei die genannte Vorrichtung von der Art ist, welche in ihrem Teil, der dazu bestimmt ist, in Kontakt mit der Vertiefung der Felge zu kommen, einen Anschlaghebel (17) für den Halt einer Wulst (T2) des Reifens umfaßt, dessen andere Wulst (T1) der Wirkung eines Keils unterworfen ist, der auf der diametralen Fläche des Rings vorgesehen ist, die jener entgegengesetzt ist, welche den Anschlaghebel trägt, dadurch **gekennzeichnet,** daß der Ring (10) aus einem einzigen Stück ausgebildet ist, das an einer Stelle seines Umfangs aufgespalten bzw. zerteilt ist, um Endteile (10a, 10b) darzubieten, die mit Bezug aufeinander verlagerbar sind, wobei der Ring (10) einen Kern (12) aus Verbundmaterial sowie eine Basis aus einem armierten thermoplastischen Harz, deren innere Umfangsoberfläche dazu bestimmt ist, in Kontakt mit der Felge (3) zu kommen, umfaßt, auf welche ein ringförmiger Zahn (13) aus Kautschuk geklebt ist, dessen äußere Umfangsoberfläche die äußere Oberfläche (21) des Rings bildet, wobei die Endteile (10a, 10b) miteinander mit Hilfe von mechanischen Befestigungen zusammengebaut sind, die dazu bestimmt sind, das Festziehen des Rings (10) auf der Radfelge (3) sicherzustellen.

2. Vorrichtung gemäß Anspruch 1, dadurch **gekennzeichnet,** daß der Zahn (13) aus einem Kautschuk ist, der ausgehend von Polyisopren hergestellt ist, das sehr elastisch ist und eine SHORE-Härte A in der Größenordnung von 70 hat.

3. Ringvorrichtung gemäß Anspruch 1 oder 2, dadurch **gekennzeichnet,** daß der Anschlaghebel (17) für den Halt einer Wulst des Reifens (2) mit dem Kern (12) des Rings (10) einstückig und aus dem gleichen Material wie der letztere ausgebildet ist.

4. Ringvorrichtung gemäß Anspruch 2 oder 3, dadurch **gekennzeichnet,** daß der Keil (25), der dazu bestimmt ist, eine Kompressionskraft auf den anderen Wulst des Reifens (2) auszuüben, einstückig mit dem ringförmigen Zahn (13) und aus dem gleichen Material wie jener ausgebildet ist.

5. Ringvorrichtung gemäß irgendeinem der vorhergehenden Ansprüche, dadurch **gekennzeichnet,** daß die mechanischen Mittel für den Zusammenbau der Endteile (10a, 10b) des Rings (10) von einem Kabel (30), zum Beispiel einem metallischen Kabel, und von Mitteln (31) für den Anschluß und das Festziehen der beiden freien Enden des Kabels (30), welche auf dem Niveau des Spalts (f) des Rings (10) vorstehen, um sie einander anzunähern oder voneinander zu entfernen, gebildet sind.

6. Ringvorrichtung gemäß Anspruch 5, dadurch **gekennzeichnet,** daß die Mittel (31) zum Anschluß und zum Festziehen von zwei Buchsen bzw. Stutzen (34a, 34b) gebildet sind, die außen mit Gewinde gemäß zwei Gewinden (35a, 35b) mit umgekehrter Steigung versehen und jeweils an den beiden freien Enden des Kabels (30) an- bzw. eingesetzt bzw. -gefügt sind, und durch eine Mutter (36) mit komplementären Gewinden (36a, 36b), die auf die beiden Buchsen bzw. Stutzen (34a, 34b) geschraubt und dazu bestimmt ist, sie gemäß dem der Mutter (36) aufgeprägten Drehsinn einander anzunähern oder auseinanderzubringen.

7. Ringvorrichtung gemäß Anspruch 6, dadurch **gekennzeichnet,** daß sich die Mittel für den Anschluß (31) insgesamt in einem Loch (32a, 32b) befinden, das sich nach beiden Seiten des Spalts (f) des Rings (10) erstreckt.

8. Ringvorrichtung gemäß Anspruch 7, dadurch **gekennzeichnet,** daß das Loch (32a, 32b) ein zentrales Loch ist, welches an der äußeren Umfangsoberfläche des Rings (10) mündet.

9. Ringvorrichtung gemäß Anspruch 7, dadurch **gekennzeichnet,** daß das Loch (32) auf dem Niveau der beiden Seitenflächen des Rings (10) mündet.

10. Ringvorrichtung gemäß irgendeinem der Ansprüche 5 bis 9, dadurch **gekennzeichnet,** daß das Kabel (30) in dem Ring (10) versenkt ist.

11. Ringvorrichtung gemäß irgendeinem der Ansprüche 5 bis 9, dadurch **gekennzeichnet,** daß das Kabel (30) in dem ringförmigen Zahn (13) des Rings (10) versenkt ist.

12. Ringvorrichtung gemäß irgendeinem der Ansprüche 1 bis 4, dadurch **gekennzeichnet,** daß die mechanischen Mittel zum Zusammenbau der Endteile (10a, 10b) des Rings (10) von einer Schraube (40) gebildet sind, die mit einem Kopf (41), einem Gewindeschaft (42), einer auf den Schaft (42) aufgeschraubten Mutter (43) und einer mit dem Schaft (42) verbundenen Betätigungsmutter (44) gebildet sind.

13. Ringvorrichtung gemäß Anspruch 12, dadurch **gekennzeichnet,** daß der Kopf (41) und die Mutter (43) in Löchern (45a, 45b) untergebracht und festgehalten sind, die in den Endteilen (10a, 10b) des Rings (10) jeweils vorgesehen sind.

14. Ringvorrichtung gemäß Anspruch 13, dadurch **gekennzeichnet,** daß die Löcher (45a, 45b) in dem Kern (12) des Rings (10) ausgeführt sind.
